(19) Europäisches Patentamt
European Patent Office
Office européen des brevets

(11) **EP 4 474 433 B1**

(12) **EUROPEAN PATENT SPECIFICATION**

(45) Date of publication and mention
of the grant of the patent:
**22.07.2026 Bulletin 2026/30**

(21) Application number: **23875906.2**

(22) Date of filing: **07.09.2023**

(51) International Patent Classification (IPC):
*C09C 1/48* (2006.01)    *C08K 3/04* (2006.01)
*C09C 1/50* (2006.01)    *C09C 1/56* (2006.01)

(52) Cooperative Patent Classification (CPC):
**C09C 1/482; B09B 3/40; C08K 3/04; C08L 21/00;
C09C 1/48; C09C 1/50; C09C 1/56; C09C 1/565;
B09B 2101/80**

(86) International application number:
**PCT/JP2023/032624**

(87) International publication number:
**WO 2024/224657 (31.10.2024 Gazette 2024/44)**

(54) **METHOD FOR PRODUCING MODIFIED RECYCLED CARBON BLACK**

VERFAHREN ZUR HERSTELLUNG VON MODIFIZIERTEM RECYCELTEM RUSS

PROCÉDÉ DE PRODUCTION DE NOIR DE CARBONE RECYCLÉ MODIFIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.04.2023 JP 2023072019**

(43) Date of publication of application:
**11.12.2024 Bulletin 2024/50**

(73) Proprietor: **Tokai Carbon Co., Ltd.
Minato-ku
Tokyo 107-8636 (JP)**

(72) Inventors:
• **KIRIYAMA, Daishi
Tokyo 107-8636 (JP)**

• **SAKAKIBARA, Seiya
Tokyo 107-8636 (JP)**
• **KURISU, Kengo
Tokyo 107-8636 (JP)**
• **HIENO, Atsushi
Tokyo 107-8636 (JP)**

(74) Representative: **Müller-Boré & Partner
Patentanwälte PartG mbB
Friedenheimer Brücke 21
80639 München (DE)**

(56) References cited:
**EP-A1- 4 471 098      CN-A- 113 667 328
CN-A- 113 667 328      CN-A- 115 537 044
JP-A- H07 268 238      JP-A- H08 159 430**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a method for producing recycled carbon black with a modified surface condition.

BACKGROUND ART

For reduction in the load on the global environment in recent years, efforts such as carbon neutral and sustainability are being vigorously made. In the field of carbon black, as part of sustainability activities, use of recycled carbon black obtained by pyrolyzing waste tires is being studied.

As a method for producing recycled carbon black by pyrolysis of waste tires and the like, for example, Patent Literature 1 discloses circulating nitrogen gas and pyrolyzing waste tires at about 500°C, and Patent Literature 2 discloses processing waste rubber by a two-stage pyrolysis step and pulverizing the obtained material.

CITATION LIST

PATENT LITERATURE

Patent Literature 1: Japanese Patent No. 5813985
Patent Literature 2: WO 2013/095145 A1

SUMMARY OF INVENTION

Technical Problem

However, to the surface of the recycled carbon black obtained by pyrolyzing rubber products such as waste tires, rubber residuals with a rubber carbide as a main component adheres, and these rubber residuals, when mixed with a rubber composition, hinder adsorption of the recycled carbon black to rubber components.

Thus, the recycled carbon black unfortunately has low reinforcing properties for rubber products due to its weak bonding with rubber components.

Thus, there is a demand for recycled carbon black having high reinforcing properties for rubber products. Furthermore, from an industrial viewpoint, there is a need for a method for producing recycled carbon black having high reinforcing properties for rubber products continuously, not in a batch manner.

Given these circumstances, an object of the present invention is to provide a method for producing modified recycled carbon black that can remove rubber residuals adhering to the surface of recycled carbon black effectively and continuously.

Solution to Problem

The inventors of the present invention have earnestly studied to find out that by continuously supplying a main burner fuel, an oxygen-containing gas, and carbide-adhering recycled carbon black to a main burner combusting a fuel and generating a flame to perform combustion of the main burner fuel, when while continuously generating a flame by the main burner, the rubber carbide-adhering recycled carbon black is introduced to the flame and passed through the flame, rubber residuals adhering to the surface of the recycled carbon black are quickly oxidized and decomposed by the high-temperature flame and have achieved the present invention.

Specifically, the present invention is

(1) A method for producing modified recycled carbon black, the method including a main burner modification step of continuously supplying a main burner fuel, an oxygen-containing gas, and rubber carbide-adhering recycled carbon black to a main burner combusting a fuel and generating a flame to perform combustion of the main burner fuel and while continuously generating a flame by the main burner, introducing the rubber carbide-adhering recycled carbon black to the flame and passing the rubber carbide-adhering recycled carbon black through the flame, and

making a main burner total carbon combustion rate represented by Expression (1) below:

$$\text{Main burner total carbon combustion rate } (\%) = (A/(B + C)) \times 100 \quad (1)$$

(in the expression, A indicates an oxygen amount being supplied to the main burner; B indicates a theoretical oxygen amount required for completely combusting the rubber carbide-adhering recycled carbon black being supplied to the main burner; and C indicates a theoretical oxygen amount required for completely combusting the main burner fuel being supplied to the main burner) less than 100.0%.

(2) The method for producing modified recycled carbon black according to (1), in which the main burner modification step is a main burner modification step (1) making a main burner flame combustion rate represented by Expression (2) below:

$$\text{Main burner flame combustion rate } (\%) = (A/C) \times 100 \quad (2)$$

(in the expression, A indicates an oxygen amount being supplied to the main burner; and C indicates a theoretical oxygen amount required for completely combusting the main burner fuel being supplied to the main burner) 100.0% or more.

(3) The method for producing modified recycled carbon black according to (1), in which the main burner modification step is a main burner modification step (2) making a main burner flame combustion rate represented by Expression (2) below:

$$\text{Main burner flame combustion rate } (\%) = (A/C) \times 100 \quad (2)$$

(in the expression, A indicates an oxygen amount being supplied to the main burner; and C indicates a theoretical oxygen amount required for completely combusting the main burner fuel being supplied to the main burner) less than 100.0%.

(4) The method for producing modified recycled carbon black according to (2), further including an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (1) to the flame being generated by the auxiliary burner and passing the recycled carbon black after being subjected to the main burner modification step (1) through the flame, in which the auxiliary burner modification step is an auxiliary burner modification step (1) making an auxiliary burner flame combustion rate represented by Expression (3) below:

$$\text{Auxiliary burner flame combustion rate } (\%) = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) 100.0% or more and making an all-burner total carbon combustion rate represented by Expression (4) below:

$$\text{All-burner total carbon combustion rate } (\%) = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

(5) The method for producing modified recycled carbon black according to (2), further including an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (1) to the flame being generated by the auxiliary burner and passing the recycled carbon black after being subjected to the main burner modification step (1) through the flame, in which the auxiliary burner modification step is an auxiliary burner modification step (2) making an auxiliary burner flame combustion rate represented by Expression (3) below:

$$\text{Auxiliary burner flame combustion rate (\%)} = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) less than 100.0% and making an all-burner total carbon combustion rate represented by Expression (4) below:

$$\text{All-burner total carbon combustion rate (\%)} = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

(6) The method for producing modified recycled carbon black according to (3), further including an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (2) to the flame being generated by the auxiliary burner and passing the recycled carbon black after being subjected to the main burner modification step (2) through the flame, in which the auxiliary burner modification step is an auxiliary burner modification step (1) making an auxiliary burner flame combustion rate represented by Expression (3) below:

$$\text{Auxiliary burner flame combustion rate (\%)} = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) 100.0% or more and making an all-burner total carbon combustion rate represented by Expression (4) below:

$$\text{All-burner total carbon combustion rate (\%)} = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

(7) The method for producing modified recycled carbon black according to (3), further including an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (2) to the flame being generated by the auxiliary burner and passing the recycled carbon black after being subjected to the main burner modification step (2) through the flame, in which the auxiliary burner modification step is an auxiliary burner modification step (2) making an auxiliary burner flame combustion rate represented by Expression (3) below:

$$\text{Auxiliary burner flame combustion rate (\%)} = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) less than 100.0% and making an all-burner total carbon combustion rate represented by Expression (4) below:

$$\text{All-burner total carbon combustion rate (\%)} = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

(8) The method for producing modified recycled carbon black according to (2) or (3), further including an auxiliary fuel pyrolysis step of providing a fuel nozzle after the main burner and introducing an auxiliary fuel from the fuel nozzle to or near the flame being generated by the main burner to pyrolyze the auxiliary fuel, in which the auxiliary fuel pyrolysis step is an auxiliary fuel pyrolysis step making an overall reaction total carbon combustion rate represented by Expression (5) below:

$$\text{Overall reaction total carbon combustion rate (\%)} = (A/(B + C + F)) \times 100 \quad (5)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; and F indicates a theoretical oxygen amount required for completely combusting the auxiliary fuel being supplied from the fuel nozzle) less than 100.0%.

(9) The method for producing modified recycled carbon black according to (1), further including a particle size adjustment step of pulverizing and/or classifying the rubber carbide-adhering recycled carbon black before performing the main burner modification step.

Advantageous Effect of Invention

The present invention can provide a method for producing modified recycled carbon black that can remove rubber residuals adhering to the surface of recycled carbon black effectively and continuously.

BRIEF DESCRIPTION OF DRAWINGS

FIG. 1 is a production apparatus for modified recycled carbon black as a form example for implementing a method for producing modified recycled carbon black of the present invention.
FIG. 2 is a schematic diagram of a form example of a main burner modification step.
FIG. 3 is a schematic diagram of a form example of the main burner modification step and an auxiliary burner modification step.
FIG. 4 is a schematic end face view of a structure of a form example of a main burner.
FIG. 5 is a schematic end face view of a structure of another form example of the main burner.
FIG. 6 is a Raman spectrum of a form example of modified recycled carbon black according to the present invention.
FIG. 7 is a Raman spectrum of a form example of recycled carbon black before modification.

DESCRIPTION OF EMBODIMENTS

The following describes an embodiment of the present invention in detail with reference to the accompanying drawings as appropriate. The following detailed description of the present invention is an example of the embodiment, and the present invention is not to be construed as limited in any way to the present embodiment.

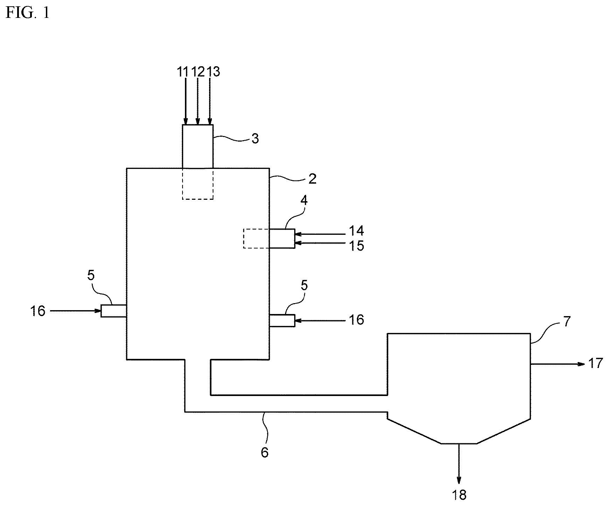

FIG. 1 is a schematic diagram of a production apparatus for modified recycled carbon black as a form example for implementing a method for producing modified recycled carbon black of the present invention. In FIG. 1, this production apparatus 1 for modified recycled carbon black has a burner modification part 2 in which a main burner 3, an auxiliary burner 4, and a cooling water supply pipe 5 are installed and a collection part 7 in which a bag filter is installed thereinside. The burner modification part 2 and the collection part 7 are coupled to each other with a coupling pipe 6. The main burner 3 is installed on the upper side of the burner modification part 2. Connected to the main burner 3 are a supply pipe for a main burner fuel 11, a supply pipe for an oxygen-containing gas 12, and a supply pipe for raw material recycled carbon black and a carrier gas 13. Connected to the auxiliary burner 4 are supply pipes for an auxiliary burner fuel 14 and an oxygen-containing gas 15.

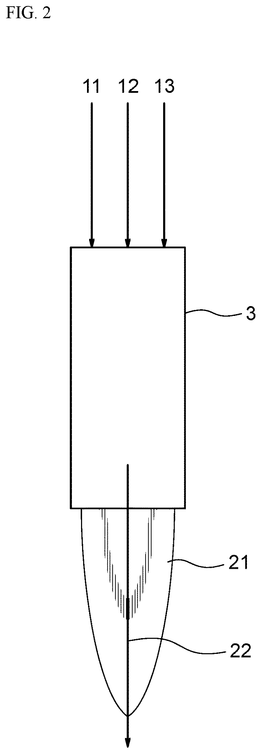

As illustrated in FIG. 2, in the burner modification part 2, fuel is combusted by the main burner 3 to generate a flame 21, and with the flame 21 generated in the main burner 3, by continuously supplying the main burner fuel 11, the oxygen-containing gas 12, and the raw material recycled carbon black and the carrier gas 13 to the main burner 3 from a fuel supply side with respect to the flame 21, while continuously generating the flame 21 by the main burner 3, the raw material recycled carbon black is introduced to the flame 21 being generated by the main burner 3 from the fuel supply side and passed through the flame 21. When the raw material recycled carbon black passes through the flame 21 being generated by the main burner 3, the surface of the recycled carbon black is modified. FIG. 2 illustrates a moving direction 22 of the raw material recycled carbon black, in which the recycled carbon black moves from the fuel supply side toward the tip of the flam 21 with respect to the flame 21 being generated by the main burner 3.

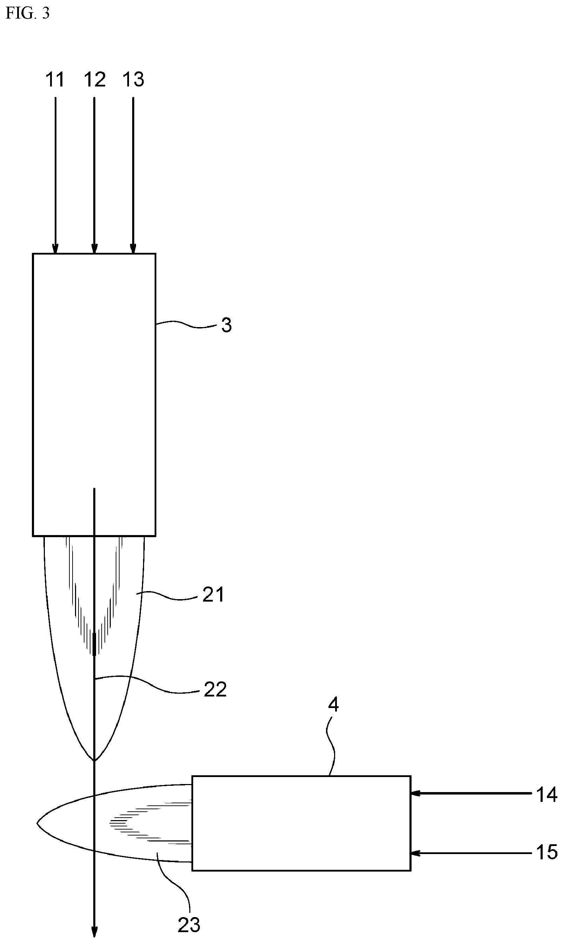

As illustrated in FIG. 3, the burner modification part 2 can perform modification by the auxiliary burner 4 in addition to the modification using the main burner 3. As in FIG. 2, the recycled carbon black is introduced to the flame 21 being generated by the main burner 3 and passed through the flame 21, and then fuel is combusted by the auxiliary burner 4 to generate a flame 23, and with the flame 23 generated by the auxiliary burner 4, the recycled carbon black having passed through the flame 21 generated by the main burner 3 is introduced to the flame 23 being generated by the auxiliary burner 4 and passed through the flame 23. When the recycled carbon black having passed through the flame 21 being generated by the main burner 3 passes through the flame 23 being generated by the auxiliary burner 4, the surface of the recycled carbon black is modified. FIG. 3 illustrates a moving direction 22 of the recycled carbon black, in which after passing through the flame 21 being generated by the main burner 3, the recycled carbon black is introduced to the flame 23 being generated by the auxiliary burner 4 and passed through the flame 23.

In the burner modification part 2, the modification of the recycled carbon black using the main burner 3 is always performed, and as needed, the modification of the recycled carbon black using the auxiliary burner 4 is performed.

After passing the raw material recycled carbon black through the flame being generated by the main burner 3 or passing the raw material recycled carbon black through the flame being generated by the main burner 3 and the flame being generated by the auxiliary burner 4 in the burner modification part 2, cooling water is supplied from the cooling water supply pipe 5 installed at the lower part of the burner modification part 2 into the burner modification part 2 to bring cooling water 16 into contact with the recycled carbon black to cool it.

Next, the cooled recycled carbon black and gases such as combustion gas, decomposition gas, and water vapor are introduced to the collection part 7 through the coupling pipe 6 and are separated into gas 17 and modified recycled carbon black 18 by the bag filter installed in the collection part 7 to obtain the modified recycled carbon black 18.

The method for producing modified recycled carbon black of the present invention includes a main burner modification step of continuously supplying a main burner fuel, an oxygen-containing gas, and rubber carbide-adhering recycled carbon black to a main burner combusting a fuel and generating a flame to perform combustion of the main burner fuel and while continuously generating a flame by the main burner, introducing the rubber carbide-adhering recycled carbon black to the flame and passing the rubber carbide-adhering recycled carbon black through the flame, and makes a main burner total carbon combustion rate represented by Expression (1) below:

$$\text{Main burner total carbon combustion rate } (\%) = (A/(B + C)) \times 100 \quad (1)$$

(in the expression, A indicates an oxygen amount being supplied to the main burner; B indicates a theoretical oxygen amount required for completely combusting the rubber carbide-adhering recycled carbon black being supplied to the main burner; and C indicates a theoretical oxygen amount required for completely combusting the main burner fuel being supplied to the main burner) less than 100.0%.

The main burner modification step according to the method for producing modified recycled carbon black of the present invention is a step of continuously supplying a main burner fuel, an oxygen-containing gas, and carbide-adhering recycled carbon black to a main burner combusting a fuel and generating a flame to perform modification of the surface of the carbide-adhering recycled carbon black.

In the main burner modification step, the carbide-adhering recycled carbon black as a raw material for modification (hereinafter also referred to as raw material recycled carbon black) is a carbon black obtained by pyrolyzing rubber products such as waste tires and is a carbon black in which rubber residuals with a rubber carbide as a main component adheres to its surface. Examples of the raw material recycled carbon black as a raw material for modification include PB365 manufactured by Enrestec, Inc. BolderBlack manufactured by Bolder Industries, DE-Black manufactured by Delta Energy LLC., and MondoBlack manufactured by ECOLOMONDO. Such raw material recycled carbon black may be produced by any method of production, which is not limited to a particular method, and examples thereof include the method described in Patent Literature 2.

The raw material recycled carbon black is a carbon black having, in a Raman spectrum obtained by performing measurement at an excitation wavelength of 532 nm by laser Raman spectroscopy, a peak intensity of a peak (the G band) having a peak top in a range of $1,580 \pm 20$ cm$^{-1}$ with the peak intensity of a peak (the D band) having a peak top in a range of $1,350 \pm 10$ cm$^{-1}$ being 100 (hereinafter also referred to as the G band intensity with the D band intensity being 100) of 112 or more and 200 or less and preferably 112 or more and 190 or less. The G band intensity with the D band intensity being 100 is described below.

Since the raw material recycled carbon black is obtained by modifying recycled carbon black obtained by pyrolyzing rubber products such as waste tires, the ash content of the raw material recycled carbon black is, for example, 3.0% or more and 50.0% or less and preferably 5.0% or more and 35.0% or less.

In the present invention, the ash content means a value measured by the method specified in JIS K 6218-2.

The main burner fuel according to the main burner modification step is not limited to a particular fuel so long as it combusts by means of oxygen in the oxygen-containing gas to generate a flame on contact with the flame being generated by the main burner. Examples thereof include hydrocarbon gases such as methane, ethane, propane, natural gas, ethylene, and acetylene, hydrogen, ammonia, mixed gases of these, gases generated by pyrolysis of rubber and plastic, as liquid fuels, aromatic hydrocarbons such as naphthalene and anthracene, coal-based hydrocarbons such as creosote oil and tar oil, petroleum-based heavy crude oils such as FCC residual oil and ethylene heavy end oil, hydrocarbons such as acetylene-based unsaturated hydrocarbons and aliphatic hydrocarbons such as hexane, vegetable oils such as rapeseed oil and soybean oil, and oils generated by pyrolysis of rubber and plastic. In view of a higher flame temperature, preferred are hydrocarbon gases such as methane, ethane, propane, natural gas, ethylene, and acetylene.

Examples of the oxygen-containing gas according to the main burner modification step include oxygen gas, a gas containing oxygen, and air. Air is preferred from the viewpoint of economy.

In the main burner modification step, the main burner fuel, the oxygen-containing gas, and the carbide-adhering recycled carbon black are continuously supplied to the main burner combusting the main burner fuel and generating a flame from the fuel supply side with respect to the flame to perform combustion of the main burner fuel, and while continuously generating a flame by the main burner, the raw material recycled carbon black is introduced to the flame being generated by the main burner and passed through the flame.

In the main burner modification step, the raw material recycled carbon black is supplied to the main burner using a carrier gas. The carrier gas may be an inert gas such as nitrogen gas, argon gas, or helium gas or an oxygen-containing gas such as oxygen gas, a gas containing oxygen, or air. As the carrier gas, the oxygen-containing gas is preferred because the raw material recycled carbon black is easily oxidized.

In the main burner modification step, the raw material recycled carbon black carried by the carrier gas, the oxidative gas, and the main burner fuel can be supplied to the main burner in separate paths. In the main burner modification step, the raw material recycled carbon black and the oxidative gas are mixed together first, and the resulting mixed flow and the main burner fuel can be supplied to the main burner.

In the main burner modification step, when the raw material recycled carbon black and the oxygen-containing gas are introduced to the flame, by introducing them to the flame as a mixed flow of the raw material recycled carbon black and the oxygen-containing gas, the oxygen-containing gas can be made present near the raw material recycled carbon black during the introduction to the flame, and thus the contact between the raw material recycled carbon black and the oxygen-containing gas can be prioritized over the contact between the raw material recycled carbon black and the fuel gas, thus facilitating oxidation of the raw material recycled carbon black.

In the main burner modification step, (i) when the raw material recycled carbon black and the carrier gas, the oxygen-containing gas, and the main burner fuel are introduced to the flame, when viewed in a plane perpendicular to the moving direction of the raw material recycled carbon black, the raw material recycled carbon black and the carrier gas, the oxygen-containing gas, and the main burner fuel can be introduced to the flame with the raw material recycled carbon black made present at the center, with the oxygen-containing gas made present so as to surround the raw material recycled carbon black, and with the main burner fuel made present so as to surround the oxygen-containing gas, (ii) when the raw material recycled carbon black and the carrier gas, the oxygen-containing gas, and the main burner fuel are introduced to the flame, when viewed in a plane perpendicular to the moving direction of the raw material recycled carbon black, the raw material recycled carbon black and the carrier gas, the oxygen-containing gas, and the main burner fuel can be introduced to the flame with the main burner fuel made present at the center, with the oxygen-containing gas made present so as to surround the main burner fuel, and with the raw material recycled carbon black made present so as to surround the oxygen-containing gas, and (iii) when the raw material recycled carbon black and the carrier gas, the oxygen-containing gas, and the main burner fuel are introduced to the flame, when viewed in a plane perpendicular to the moving direction of the raw material recycled carbon black, the raw material recycled carbon black and the carrier gas, the oxygen-containing gas, and the main burner fuel can be introduced to the flame with the raw material recycled carbon black made present at the center, with the main burner fuel made present so as to surround the raw material recycled carbon black, and with the oxygen-containing gas made present so as to surround the main burner fuel. Of these, (i) and (ii) are preferred because they enable the oxygen-containing gas to be present near the raw material recycled carbon black during introduction to the flame, thus prioritizing the contact between the raw material recycled carbon black and the oxygen-containing gas over the contact between the raw material recycled carbon black and the fuel gas, and thus facilitating oxidation of the raw material recycled carbon black.

In the main burner modification step, the temperature of the flame being generated by the main burner is high, and thus when the raw material recycled carbon black passes through the flame being generated by the main burner, rubber residuals with a rubber carbide as a main component adhering to the surface of the raw material recycled carbon black are quickly oxidized and decomposed and are removed. In the main burner modification step, the raw material recycled carbon black is supplied to the main burner together with the main burner fuel and the oxygen-containing gas and is exposed to a high temperature only while passing through the flame being generated by the main burner, and thus the time during which it is exposed to the high temperature is short. Thus, the surface of the raw material recycled carbon black is selectively oxidized.

On the other hand, when the raw material recycled carbon black is supplied to a furnace together with the oxidative gas, and oxidation processing for the raw material recycled carbon black is performed within the furnace, the temperature at which the raw material recycled carbon black is exposed is not as high as the temperature of the flame, and the time during which the raw material recycled carbon black is heated is longer. If the temperature at which the raw material recycled carbon black is exposed is low, oxidation proceeds from the parts that are easily oxidized and decomposed, and if the time is long, oxidation proceeds to the inside of raw material recycled carbon black particles, forming pores in the raw material recycled carbon black.

The main burner modification step makes a main burner total carbon combustion rate represented by Expression (1) below:

$$\text{Main burner total carbon combustion rate (\%)} = (A/(B + C)) \times 100 \quad (1)$$

(in the expression, A indicates an oxygen amount being supplied to the main burner; B indicates a theoretical oxygen amount required for completely combusting the rubber carbide-adhering recycled carbon black being supplied to the main burner; and C indicates a theoretical oxygen amount required for completely combusting the main burner fuel being supplied to the main burner) less than 100.0%. A is an oxygen amount per unit time of oxygen being supplied to the main burner, B is an amount per unit time of a theoretical oxygen amount, when all components except for the ash content of the rubber carbide-adhering recycled carbon black being supplied to the main burner are regarded as carbon to calculate a carbon content, required for completely combusting the carbon content, and C is an amount per unit time of a theoretical oxygen amount required for completely combusting the main burner fuel being supplied to the main burner.

In the main burner modification step, controlling the main burner total carbon combustion rate to less than 100.0% means not allowing the main burner fuel and the raw material recycled carbon black being supplied to the main burner to completely combust. If the main burner fuel and the raw material recycled carbon black being supplied to the main burner completely combust, the recycled carbon black is oxidized and lost, and the modified recycled carbon black cannot be obtained. Thus, by making the main burner total carbon combustion rate less than 100.0%, modification of the surface of the raw material recycled carbon black by oxidative decomposition can be performed. The main burner total carbon combustion rate is preferably 10.0% or more and 90.0% or less and more preferably 15.0% or more and 80.0% or less from the viewpoint of the balance between the collection amount of modified particles to be obtained and a rubber carbide amount required to be removed.

In the method for producing modified recycled carbon black of the present invention, examples of the main burner modification step include a main burner modification step (1) making a main burner flame combustion rate represented by Expression (2) below:

$$\text{Main burner flame combustion rate (\%)} = (A/C) \times 100 \quad (2)$$

(in the expression, A indicates an oxygen amount being supplied to the main burner; and C indicates a theoretical oxygen amount required for completely combusting the main burner fuel being supplied to the main burner) 100.0% or more.

In the main burner modification step (1), controlling the main burner flame combustion rate to 100.0% or more means allowing the main burner fuel being supplied to the main burner completely combust. In the main burner modification step (1), by making the main burner flame combustion rate 100.0% or more, the surface of the raw material recycled carbon black is easily oxidized, thus increasing the oxidative removability of the residual rubber content adhering to the raw material recycled carbon black. The main burner flame combustion rate is preferably 105.0% or more and 500.0% or less and more preferably 110.0% or more and 400.0% or less from the viewpoint of the balance between the temperature of the flame and a rubber carbide amount required to be removed. Since the main burner modification step (1) is a form of the main burner modification step, the main burner total carbon combustion rate is less than 100.0%, preferably 15.0% or more and 90.0% or less, and more preferably 20.0% or more and 80.0% or less.

In the method for producing modified recycled carbon black of the present invention, examples of the main burner modification step include a main burner modification step (2) making a main burner flame combustion rate represented by Expression (2) below:

$$\text{Main burner flame combustion rate (\%)} = (A/C) \times 100 \quad (2)$$

(in the expression, A indicates an oxygen amount being supplied to the main burner; and C indicates a theoretical oxygen amount required for completely combusting the main burner fuel being supplied to the main burner) less than 100.0%.

In the main burner modification step (2), controlling the main burner flame combustion rate to less than 100.0% means not allowing the main burner fuel being supplied to the main burner to completely combust. By the main burner fuel being heated under conditions not allowing the main burner fuel being supplied to the main burner to completely combust, the main burner fuel is pyrolyzed to generate a carbide, and thus the generated carbide is caused to adhere to the recycled carbon black subjected to surface modification when passing through the flame being generated by the main burner, and the specific surface area of the modified recycled carbon black can be adjusted. The main burner flame combustion rate is preferably 20.0% or more and 99.0% or less and more preferably 30.0% or more and 95.0% or less from the viewpoint of the appropriate value of the specific surface area for improving reinforcing properties for rubber. Since the main burner modification step (2) is a form of the main burner modification step, the main burner total carbon combustion rate is less than 100.0%, preferably 15.0% or more and 90.0% or less, and more preferably 20.0% or more and 80.0% or less.

The method for producing modified recycled carbon black of the present invention can include an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step to the flame being generated by the auxiliary burner and passing the recycled carbon black after being subjected to the main burner modification step through the flame. In the method for producing modified recycled carbon black of the present invention, the auxiliary burner modification step is performed as needed.

The auxiliary burner modification step according to the method for producing modified recycled carbon black of the present invention is a step of combusting the auxiliary burner fuel to generate a flame after the flame being generated by the main burner and continuously supplying the recycled carbon black after being subjected to the main burner modification step to introduce the recycled carbon black to the flame generated by the auxiliary burner, to pass the recycled carbon black through the flame, and to perform modification of the surface of the recycled carbon black.

What is modified in the auxiliary burner modification step is the recycled carbon black after being subjected to the main burner modification step, that is, the recycled carbon black having passed through the flame being generated by the main burner or the recycled carbon black passing near the tip of the flame being generated by the main burner.

In the auxiliary burner modification step, the auxiliary burner fuel and an oxygen-containing gas are continuously supplied to the auxiliary burner to continuously generate a flame. The position of the flame generated by the auxiliary burner is the tip of the flame being generated by the main burner, within the flame and near the tip of the flame being generated by the main burner, or outside the flame and near the tip of the flame being generated by the main burner and preferably outside the flame and near the tip of the flame being generated by the main burner.

The auxiliary burner fuel according to the auxiliary burner modification step is not limited to a particular fuel so long as it combusts by means of oxygen in the oxygen-containing gas to generate a flame on contact with the flame being generated by the auxiliary burner. Examples thereof include hydrocarbon gases such as methane, ethane, propane, natural gas, ethylene, and acetylene, hydrogen, ammonia, mixed gases of these, gases generated by pyrolysis of rubber and plastic, as liquid fuels, aromatic hydrocarbons such as naphthalene and anthracene, coal-based hydrocarbons such as creosote oil and tar oil, petroleum-based heavy crude oils such as FCC residual oil and ethylene heavy end oil, hydrocarbons such as acetylene-based unsaturated hydrocarbons and aliphatic hydrocarbons such as hexane, vegetable oils such as rapeseed oil and soybean oil, and oils generated by pyrolysis of rubber and plastic. In view of a higher flame temperature, preferred are hydrocarbon gases such as methane, ethane, propane, natural gas, ethylene, and acetylene.

Examples of the oxygen-containing gas according to the auxiliary burner modification step include oxygen gas, a gas containing oxygen, and air. Air is preferred from the viewpoint of economy.

In the auxiliary burner modification step, the auxiliary burner fuel is combusted to generate a flame by the auxiliary burner, and while continuously generating a flame by the auxiliary burner, the recycled carbon black after being subjected to the main burner modification step is introduced to the flame being generated by the auxiliary burner and passed through the flame.

Examples of the auxiliary burner modification step include an auxiliary burner modification step (1) making an auxiliary burner flame combustion rate represented by Expression (3) below:

$$\text{Auxiliary burner flame combustion rate (\%)} = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) 100.0% or more and making an all-burner total carbon combustion rate represented by Expression (4) below:

$$\text{All-burner total carbon combustion rate (\%)} = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%. D is an oxygen amount per unit time of oxygen being supplied to the auxiliary burner, and E is an amount per unit time of a theoretical oxygen amount required for completely combusting the auxiliary burner fuel being supplied to the auxiliary burner.

In the auxiliary burner modification step (1), controlling the all-burner total carbon combustion rate to less than 100.0% means not allowing the auxiliary burner fuel and the recycled carbon black being supplied to the auxiliary burner to completely combust. If the auxiliary burner fuel and the recycled carbon black being supplied to the auxiliary burner completely combust, the recycled carbon black is oxidized and lost, and the modified recycled carbon black cannot be obtained. The all-burner total carbon combustion rate is preferably 15.0% or more and 90.0% or less and more preferably 20.0% or more and 80.0% or less from the viewpoint of the balance between the collection amount of modified particles to be obtained and a rubber carbide amount required to be removed.

In the auxiliary burner modification step (1), controlling the auxiliary burner flame combustion rate to 100.0% or more means allowing the auxiliary burner fuel being supplied to the auxiliary burner to completely combust. In the auxiliary burner modification step (1), by making the auxiliary burner flame combustion rate to 100.0% or more, the surface of the recycled carbon black after being subjected to the main burner modification step is easily oxidized, thus increasing the oxidative removability of the residual rubber content adhering to the recycled carbon black after being subjected to the main burner modification step. In other words, the auxiliary burner modification step (1) can improve the oxidative removability of the residual rubber content that could not be removed even by performing the main burner modification step (1). The auxiliary burner flame combustion rate is preferably 105.0% or more and 600.0% or less and more preferably 110.0% or more and 500.0% or less from the viewpoint of the balance between the temperature of the flame and a rubber carbide amount required to be removed. Since the auxiliary burner modification step (1) is a form of the auxiliary burner modification step, the all-burner total carbon combustion rate is less than 100.0%, preferably 15.0% or more and 90.0% or less, and more preferably 20.0% or more and 80.0% or less.

Examples of the auxiliary burner modification step include an auxiliary burner modification step (2) making an auxiliary burner flame combustion rate represented by Expression (3) below:

$$\text{Auxiliary burner flame combustion rate (\%)} = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) less than 100.0% and making an all-burner total carbon combustion rate represented by Expression (4) below:

$$\text{All-burner total carbon combustion rate (\%)} = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

In the auxiliary burner modification step (2), controlling the all-burner total carbon combustion rate to less than 100.0% means not allowing the auxiliary burner fuel and the recycled carbon black being supplied to the auxiliary burner to completely combust. If the auxiliary burner fuel and the recycled carbon black being supplied to the auxiliary burner completely combust, the recycled carbon black is oxidized and lost, and the modified recycled carbon black cannot be obtained. The all-burner total carbon combustion rate is preferably 15.0% or more and 90.0% or less and more preferably 20.0% or more and 80.0% or less from the viewpoint of the balance between the collection amount of modified particles to be obtained and a rubber carbide amount required to be removed.

In the auxiliary burner modification step (2), controlling the auxiliary burner flame combustion rate to less than 100.0% means not allowing the auxiliary burner fuel being supplied to the auxiliary burner to completely combust. By the auxiliary burner fuel being heated under conditions not allowing the auxiliary burner fuel being supplied to the auxiliary burner to completely combust, the auxiliary burner fuel is pyrolyzed to generate a carbide, and thus the generated carbide is caused to adhere to the recycled carbon black subjected to surface modification when passing through the flame being generated by the auxiliary burner, and the specific surface area of the modified recycled carbon black can be adjusted. The auxiliary burner flame combustion rate is preferably 2.0% or more and 90.0% or less and more preferably 5.0% or more and 80.0% or less from the viewpoint of the appropriate value of the specific surface area for improving reinforcing properties for rubber. Since the auxiliary burner modification step (2) is a form of the auxiliary burner modification step, the all-burner total carbon combustion rate is less than 100.0%, preferably 15.0% or more and 90.0% or less, and more preferably 20.0% or more and 80.0% or less.

The method for producing modified recycled carbon black of the present invention can include an auxiliary fuel pyrolysis step of providing a fuel nozzle after the main burner and introducing an auxiliary fuel to or near the flame being generated by the main burner to pyrolyze the auxiliary fuel. In the method for producing modified recycled carbon black of the present invention, the auxiliary fuel pyrolysis step is performed as needed.

Examples of an apparatus for implementing the form having the auxiliary fuel pyrolysis step in the method for producing modified recycled carbon black of the present invention include the production apparatus 1 for modified recycled carbon black illustrated in FIG. 1 in which the auxiliary burner is not provided, and a fuel nozzle for introducing the auxiliary fuel is provided in or near the flame being generated by the main burner.

The auxiliary fuel pyrolysis step according to the method for producing modified recycled carbon black of the present invention is a step of introducing the auxiliary fuel to or near the flame being generated by the main burner and pyrolyzing the auxiliary fuel to generate a carbide and to perform modification of the surface of the recycled carbon black after being subjected to the main burner modification step using the generated carbide. The supply position of the auxiliary fuel is the tip of the flame being generated by the main burner, within the flame and near the tip of the flame being generated by the main burner, or outside the flame and near the tip of the flame being generated by the main burner.

What is modified in the auxiliary fuel pyrolysis step is the recycled carbon black after being subjected to the main burner modification step, that is, the recycled carbon black having passed through the flame being generated by the main burner or the recycled carbon black passing through the flame being generated by the main burner.

In the auxiliary fuel pyrolysis step, the auxiliary fuel is introduced from the fuel nozzle provided after the main burner. When the auxiliary fuel is supplied to the fuel nozzle, and the auxiliary fuel is introduced from the fuel nozzle to or near the flame being generated by the main burner, no oxygen-containing gas is mixed into the auxiliary fuel to be supplied to the fuel nozzle. The auxiliary fuel according to the auxiliary fuel pyrolysis step is not limited to a particular fuel so long as it is pyrolyzed by means of heat by the flame of the main burner. Examples thereof include hydrocarbon gases such as methane, ethane, propane, natural gas, ethylene, and acetylene, mixed gases of these, gases generated by pyrolysis of rubber and plastic, as liquid fuels, aromatic hydrocarbons such as naphthalene and anthracene, coal-based hydrocarbons such as creosote oil and tar oil, petroleum-based heavy crude oils such as FCC residual oil and ethylene heavy end oil, hydrocarbons such as acetylene-based unsaturated hydrocarbons and aliphatic hydrocarbons such as hexane, vegetable oils such as rapeseed oil and soybean oil, and oils generated by pyrolysis of rubber and plastic. In view of uniformly modifying the recycled carbon black, preferred are hydrocarbon gases such as methane, ethane, propane, natural gas, ethylene, and acetylene.

The auxiliary fuel pyrolysis step makes an overall reaction total carbon combustion rate represented by Expression (5) below:

$$\text{Overall reaction total carbon combustion rate (\%)} = (A/(B + C + F)) \times 100 \quad (5)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; and F indicates a theoretical oxygen amount required for completely combusting the auxiliary fuel being supplied from the fuel nozzle) less than 100.0%.

F is an amount per unit time of a theoretical oxygen amount required for completely combusting the auxiliary fuel being supplied from the fuel nozzle.

In the auxiliary fuel pyrolysis step, controlling the overall reaction total carbon combustion rate to less than 100.0% means not allowing the main burner fuel, the recycled carbon black, and the auxiliary fuel being supplied to the main burner to completely combust. If the main burner fuel, the recycled carbon black, and the auxiliary fuel being supplied to the main burner completely combust, the recycled carbon black is oxidized and lost, and the modified recycled carbon black cannot be obtained. By the auxiliary fuel being heated under conditions not allowing the auxiliary fuel being supplied from the auxiliary nozzle to completely combust, the auxiliary fuel is pyrolyzed to generate a carbide, and thus the generated carbide is caused to adhere to the recycled carbon black subjected to surface modification, and the specific surface area of the modified recycled carbon black can be adjusted. The overall reaction total carbon combustion rate is preferably 15.0% or more and 90.0% or less and more preferably 20.0% or more and 80.0% or less from the viewpoint of the balance between the collection amount of modified particles to be obtained and a rubber carbide amount required to be removed.

In the main burner modification step, the supply amounts of the raw material recycled carbon black, the oxygen-containing gas, and the main burner fuel are selected as appropriate so as to achieve the certain main burner total carbon combustion rate.

In the main burner modification step (1), the supply amounts are selected as appropriate so as to achieve the certain main burner total carbon combustion rate and main burner flame combustion rate. For example, when an air supply amount is set to 100.0 Nm$^3$/hour as the oxygen-containing gas, the supply amount of city gas (composition: 88% of methane, 6% of ethane, 5% of propane, and 1% of butane) as the main burner fuel is 1.8 Nm$^3$/hour or more and 8.7 Nm$^3$/hour or less and preferably 2.3 Nm$^3$/hour or more and 8.3 Nm$^3$/hour or less, and the supply amount of the raw material recycled carbon black is 3 kg/hour or more and 80 kg/hour or less and preferably 5 kg/hour or more and 60 kg/hour or less.

In the main burner modification step (2), the supply amounts are selected as appropriate so as to achieve the certain main burner total carbon combustion rate and main burner flame combustion rate. For example, when an air supply amount is set to 100.0 Nm$^3$/hour as the oxygen-containing gas, the supply amount of city gas as the main burner fuel is 9.2 Nm$^3$/hour or more and 45.0 Nm$^3$/hour or less and preferably 9.6 Nm$^3$/hour or more and 30 Nm$^3$/hour or less, and the supply amount of the raw material recycled carbon black is 2 kg/hour or more and 75 kg/hour or less and preferably 3 kg/hour or more and 55 kg/hour or less.

In the auxiliary burner modification step, the supply amounts of the oxygen-containing gas and the auxiliary burner fuel are selected as appropriate so as to achieve the certain all-burner total carbon combustion rate and auxiliary burner flame combustion rate.

In the auxiliary burner modification step (1), the supply amounts are selected as appropriate so as to achieve the certain all-burner total carbon combustion rate and auxiliary burner flame combustion rate. For example, when an air supply amount is set to 100.0 Nm$^3$/hour as the main burner oxygen-containing gas, the supply amount of air as the auxiliary burner oxygen-containing gas is 5.0 Nm$^3$/hour or more and 100.0 Nm$^3$/hour or less and preferably 10.0 Nm$^3$/hour or more and 90.0 Nm$^3$/hour or less, and the supply amount of city gas as the auxiliary burner fuel is 0.2 Nm$^3$/hour or more and 8.7 Nm$^3$/hour or less and preferably 0.5 Nm$^3$/hour or more and 7.5 Nm$^3$/hour or less.

In the auxiliary burner modification step (2), the supply amounts are selected as appropriate so as to achieve the certain all-burner total carbon combustion rate and auxiliary burner flame combustion rate. For example, when an air supply amount is set to 100.0 Nm$^3$/hour as the main burner oxygen-containing gas, the supply amount of air as the auxiliary burner oxygen-containing gas is 2 Nm$^3$/hour or more and 50.0 Nm$^3$/hour or less and preferably 5.0 Nm$^3$/hour or more and 40.0 Nm$^3$/hour or less, and the supply amount of city gas as the auxiliary burner fuel is 0.5 Nm$^3$/hour or more and 50.0 Nm$^3$/hour or less and preferably 1.0 Nm$^3$/hour or more and 30.0 Nm$^3$/hour or less.

In the auxiliary fuel pyrolysis step, the supply amount is selected as appropriate so as to achieve the certain overall reaction total carbon combustion rate. For example, when an air supply amount is set to 100.0 Nm$^3$/hour as the main burner oxygen-containing gas, the supply amount of city gas as the auxiliary fuel is 0.5 Nm$^3$/hour or more and 50.0 Nm$^3$/hour or less and preferably 1.0 Nm$^3$/hour or more and 30.0 Nm$^3$/hour or less.

If the auxiliary burner modification step is not performed or if the auxiliary fuel pyrolysis step is not performed, after performing the main burner modification step, that is, the modified recycled carbon black obtained by passing through the flame being generated by the main burner is brought into contact with water, nitrogen gas, metal walls such as heat exchangers, or the like to cool it. When the auxiliary burner modification step is performed, after performing the main burner modification step and the auxiliary burner modification step, that is, the modified recycled carbon black obtained by passing through the flame being generated by the main burner and the flame being generated by the auxiliary burner is brought into contact with water, nitrogen gas, metal walls such as heat exchangers, or the like to cool it. When the auxiliary fuel pyrolysis step is performed, after performing the main burner modification step and the auxiliary fuel pyrolysis step, that is, the modified recycled carbon black obtained by passing through the flame being generated by the main burner and the auxiliary fuel pyrolysis step being performed is brought into contact with water, nitrogen gas, metal walls such as heat exchangers, or the like to cool it. Since the modified recycled carbon black after passing through the flame is at a high temperature, when water is brought into contact with it, the water becomes water vapor.

After cooling the modified recycled carbon black, the cooled modified recycled carbon black and gases such as combustion gas, decomposition gas, and water vapor are separated from each other using a device to separate solids and gases from each other, such as a bag filter and a cyclone, to obtain the modified recycled carbon black.

The method for producing modified recycled carbon black of the present invention can include a particle size adjustment step of pulverizing and/or classifying the raw material recycled carbon black before performing the main burner modification step. By performing the particle size adjustment step before performing the main burner modification step, variations in the particle size of the raw material recycled carbon black to be supplied to the main burner modification step are reduced, thus reducing variations in the surface modification of the raw material recycled carbon black in the main burner modification step.

The pulverizing apparatus used in the particle size adjustment step is not limited to a particular apparatus, and examples thereof include roller mills, jet mills, hammer mills, pin mills, cutter mills, roll crushers, stamp mills, and ring mills. The classifying apparatus used in the particle size adjustment step is not limited to a particular apparatus, and examples of a classification step include mechanical classifiers including a classifying rotor or the like to achieve centrifugal classification, classifiers achieving centrifugal classification by a swirling flow (a free vortex or semi-free vortex) generated by a high-speed airflow supply, and classifiers utilizing the inertial force and the Coanda effect of particles accelerated by a bending high-speed airflow.

The main burner is not limited to a particular burner so long as it can combust the main burner fuel to generate a flame, continuously supply the main burner fuel, the oxygen-containing gas, and the raw material recycled carbon black from the fuel supply side to perform combustion of the main burner fuel, and while continuously generating a flame by the main burner, introduce the raw material recycled carbon black to the flame and pass the raw material recycled carbon black through the flame.

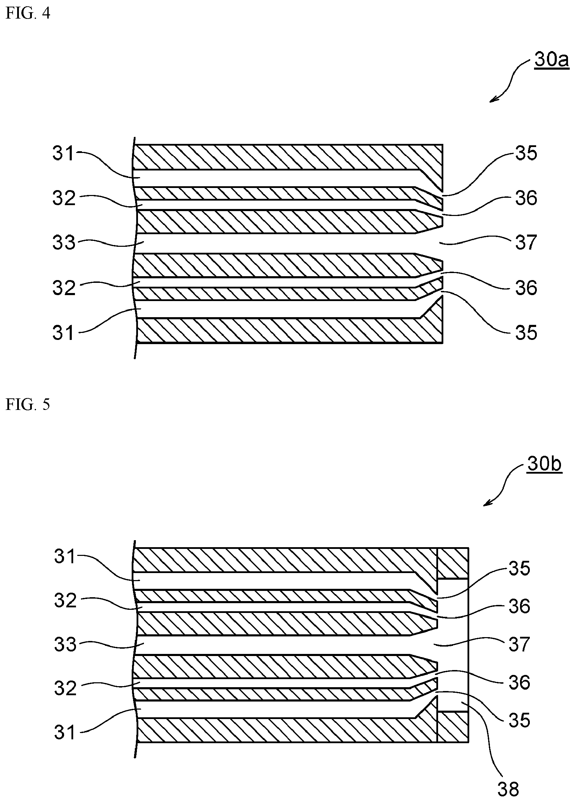

Examples of the main burner include a main burner of a form example illustrated in FIG. 4. FIG. 4 is a schematic end face view of the form example of the main burner. In FIG. 4, the main burner 30a has a supply path 33 for the raw material recycled carbon black and the carrier gas in the central part of the burner, and an ejection port 37 for the raw material recycled carbon black and the carrier gas is formed on a flame generating side. The main burner 30a has a supply path 32 for the oxygen-containing gas so as to surround the supply path 33 for the raw material recycled carbon black and the carrier gas, and an ejection port 36 for the oxygen-containing gas is formed on the flame generating side. The main burner 30a has a supply path 31 for the main burner fuel so as to surround the supply path 32 for the oxygen-containing gas, and an ejection port 35 for the main burner fuel is formed on the flame generating side. When viewed in a plane perpendicular to the moving direction of the raw material recycled carbon black, the circular supply path for the raw material recycled carbon black and the carrier gas is formed at the central part, the cylindrical supply path for the oxygen-containing gas is formed so as to surround the supply path for the raw material recycled carbon black and the carrier gas, and the cylindrical supply path for the main burner fuel is formed so as to surround the supply path for the oxygen-containing gas. In the form example in FIG. 4, at the end of the main burner closer to the flame, the supply path for the raw material recycled carbon black and the carrier gas, the supply path for the oxygen-containing gas, and the supply path for the main burner fuel open.

By supplying the raw material recycled carbon black and the carrier gas, the oxygen-containing gas, and the main burner fuel from the fuel supply side of the main burner 30a, the raw material recycled carbon black and the carrier gas, the oxygen-containing gas, and the main burner fuel can be introduced to the flame with the raw material recycled carbon black made present at the center, with the oxygen-containing gas made present so as to surround the raw material recycled carbon black, and with the main burner fuel made present so as to surround the oxygen-containing gas. By using the main burner 30a, when the raw material recycled carbon black and the carrier gas, the oxygen-containing gas, and the main burner fuel are introduced to the flame, the oxygen-containing gas can be made present near the raw material recycled carbon black, and thus the contact between the raw material recycled carbon black and the oxygen-containing gas can be prioritized over the contact between the raw material recycled carbon black and the fuel gas, thus facilitating oxidation of the raw material recycled carbon black.

Examples of the main burner include a main burner of a form example illustrated in FIG. 5. FIG. 5 is a schematic end face view of the form example of the main burner. In FIG. 5, this main burner 30b has a supply path 33 for the raw material recycled carbon black and the carrier gas in the central part of the burner, and an ejection port 37 for the raw material recycled carbon black and the carrier gas is formed on a flame generating side. The main burner 30b has a supply path 32 for the oxygen-containing gas so as to surround the supply path 33 for the raw material recycled carbon black and the carrier gas, and an ejection port 36 for the oxygen-containing gas is formed on the flame generating side. The main burner 30b has a supply path 31 for the main burner fuel so as to surround the supply path 32 for the oxygen-containing gas, and an ejection port 35 for the main burner fuel is formed on the flame generating side. The ejection port 37 for the raw material recycled carbon black and the carrier gas, the ejection port 36 for the oxygen-containing gas, and the ejection port 35 for the main burner fuel open to a mixing chamber 38, and a mixed flow is ejected from the mixing chamber 38 toward the flame. In the form example in FIG. 5, at the end of the main burner closer to the flame, the supply path for the raw material recycled carbon black and the carrier gas, the supply path for the oxygen-containing gas, and the supply path for the main burner fuel open to the mixing chamber formed in front of the end of the main burner closer to the flame, and the mixing chamber opens to the end of the main burner closer to the flame.

Examples of the structure of the main burner include structures of burners described in Japanese Patent No. 3001561, Japanese Patent No. 5367471, Japanese Patent No. 3312228, Japanese Patent No. 4769276, Japanese Patent Publication No. 2021-50897-A, Japanese Patent Publication No. 2010-156025-A, and Japanese Patent No. 6580710.

In the method for producing modified recycled carbon black of the present invention, by performing the main burner modification step or by performing the main burner modification step and the auxiliary burner modification step, the modified recycled carbon black with the G band intensity with the D band intensity being 100 and the nitrogen adsorption

specific surface area $N_2SA$ of the modified recycled carbon black being within the ranges shown below can be obtained. The modified recycled carbon black with the G band intensity with the D band intensity being 100 and the nitrogen adsorption specific surface area $N_2SA$ being within the ranges shown below has strong bonding with rubber components and has not too high cohesiveness, resulting in high reinforcing properties for rubber products. Thus, the method for producing modified recycled carbon black of the present invention can continuously produce modified recycled carbon black that can increase reinforcing properties for rubber products.

The modified recycled carbon black obtained by implementing the method for producing modified recycled carbon black of the present invention is one in which the surface of recycled carbon black obtained by pyrolyzing rubber products such as waste tires is modified. More specifically, the modified recycled carbon black of the present invention is obtained by removing all or part of rubber residuals with a rubber carbide as a main component adhering to the surface of the recycled carbon black obtained by pyrolyzing rubber products such as waste tires.

The recycled carbon black with the rubber carbide adhering to its surface has, in a Raman spectrum obtained by performing measurement at an excitation wavelength of 532 nm by laser Raman spectroscopy, a peak intensity of a peak having a peak top in a range of $1,580 \pm 20$ cm$^{-1}$ with the peak intensity of a peak having a peak top in a range of $1,350 \pm 10$ cm$^{-1}$ being 100 of 112 or more.

In contrast to such recycled carbon black with the rubber carbide adhering to its surface, the modified recycled carbon black, from which the rubber residuals with the rubber carbide as a main component adhering to the surface have been removed, has, in a Raman spectrum obtained by performing measurement at an excitation wavelength of 532 nm by laser Raman spectroscopy, a peak intensity of a peak (the G band) having a peak top in a range of $1,580 \pm 20$ cm$^{-1}$ with the peak intensity of a peak (the D band) having a peak top in a range of $1,350 \pm 10$ cm$^{-1}$ being 100 of 84 or more and 111 or less. By the G band intensity with the D band intensity being 100 of the recycled carbon black being within the above range, the rubber residuals adhering to the surface of the recycled carbon black are absent or few, increasing the bonding of the recycled carbon black with rubber components, thus increasing reinforcing properties for rubber products. The G band intensity with the D band intensity being 100 is preferably 85 or more and 110 or less and more preferably 90 or more and 105 or less from the viewpoint of performing a proper reaction with rubber to improve reinforcing properties. On the other hand, if the G band intensity with the D band intensity being 100 of the recycled carbon black exceeds the above range, many rubber residuals adhere to the surface of the recycled carbon black, thus reducing the bonding of the recycled carbon black with rubber components. If it is less than the above range, there are many defects in the graphite structure on the carbon black surface, and the surface activity is too high, which promotes cohesion of the carbon black in rubber and reduces reinforcing properties for rubber.

In the present invention, the G band intensity with the D band intensity being 100 and the D band intensity mean values calculated from a Raman spectrum obtained by performing measurement on the following (1) measurement conditions and then performing (2) data processing.

(1) Using a laser Raman spectrometer, HR-800 manufactured by Horiba, Ltd., a carbon black sample to be measured in the form of several particles are placed on a glass slide and are rubbed several times with a spatula to flatten their surfaces, which are measured on the following measurement conditions.

> YAG laser (excitation wavelength): 532 nm
> Number of engraved lines: 600 gr/mm
> Filter: D0.6
> Objective lens magnification: 100-power
> Exposure time: 150 seconds
> Number of times of integration: 2 times

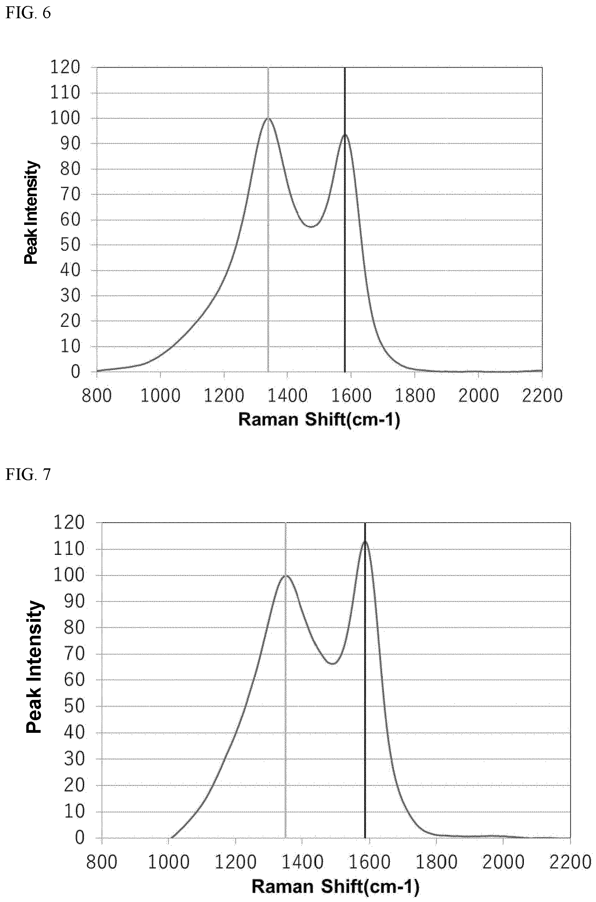

(2) The signal intensity at a measurement wavelength (Raman shift) of 2,100 cm$^{-1}$ of the obtained spectrum is set to 0, an average is determined for each 39 adjacent data points forming the spectrum, and then smoothing processing is performed to obtain a spectral curve connecting the above averages to each other. Next, to facilitate comparison between samples, the peak top intensity observed in a measurement wavelength range of $1,350 \pm 10$ cm$^{-1}$ is set to 100. FIG. 6 illustrates a spectrum example obtained in this case.

As illustrated in FIG. 6, for the modified recycled carbon black, in a Raman spectrum obtained by performing measurement at an excitation wavelength of 532 nm by laser Raman spectroscopy, a peak (the D band) having a peak top in a range of $1,350 \pm 10$ cm$^{-1}$ and a peak (the G band) having a peak top in a range of $1,580 \pm 20$ cm$^{-1}$ are detected.

From the value of the peak intensity of the D band and the value of the peak intensity of the G band, the peak intensity of the G band with the peak intensity of the D band being 100 is calculated. Study by the inventors of the present invention found that the state of removal of the rubber carbide from the recycled carbon black was able to be determined from the magnitude of the peak intensity of the G band when compared to the peak intensity of the D band because a larger adhesion amount of the rubber carbide of the recycled carbon black showed the G band with higher intensity.

FIG. 6 is a Raman spectrum of a form example of the modified recycled carbon black, in which with the peak intensity of the D band being 100, the peak intensity of the G band is 93, which is in a range of 84 or more and 111 or less. On the other hand, FIG. 7 is a Raman spectrum of a form example of recycled carbon black before modification, in which with the peak intensity of the D band being 100, the peak intensity of the G band is 113, which is beyond a range of 84 or more and 111 or less. These show that the recycled carbon black before modification illustrated in FIG. 7 has a rubber carbide adhering to its surface and that in the modified recycled carbon black illustrated in FIG. 6, the rubber carbide adhering to its surface has been removed owing to its being modified.

The nitrogen adsorption specific surface area $N_2SA$ of the modified recycled carbon black is 15 m$^2$/g or more and 350 m$^2$/g or less. By the nitrogen adsorption specific surface area $N_2SA$ of the recycled carbon black being within the above range, the cohesive strength of the recycled carbon black is reduced, thus increasing reinforcing properties for rubber products. The nitrogen adsorption specific surface area $N_2SA$ of the recycled carbon black is preferably 20 m$^2$/g or more and 300 m$^2$/g or less and more preferably 30 m$^2$/g or more and 250 m$^2$/g or less from the viewpoint of optimizing the area in contact with rubber and improving reinforcing properties for rubber. On the other hand, if the nitrogen adsorption specific surface area $N_2SA$ of the recycled carbon black is less than the above range, the area of the surface in contact with rubber is small, and the reinforcing effect is not fully expressed, resulting in reduced reinforcing properties for rubber. If it exceeds the above range, the cohesive strength of the recycled carbon black is too high, thus reducing reinforcing properties for rubber products.

In the present invention, the nitrogen adsorption specific surface area $N_2SA$ means a value measured by a nitrogen adsorption amount in conformity with the method specified in JIS K6217-2 2001 "Test method for basic performance of carbon black for rubber."

From the viewpoint of improving reinforcing properties for rubber, the absorption amount of DBP (dibutyl phthalate) of the modified recycled carbon black is preferably 60 cm$^3$/100 g or more and 200 cm$^3$/100 g or less, more preferably 70 cm$^3$/100 g or more and 195 cm$^3$/100 g or less, and even more preferably 80 cm$^3$/100 g or more and 190 cm$^3$/100 g or less. On the other hand, if the DBP absorption amount is less than the above range, the dispersibility of the carbon black may deteriorate when blended into a rubber composition, and reinforcing properties for rubber to be obtained may be likely to be reduced. If it exceeds the above range, the processability of rubber to be obtained when blended into the rubber composition may reduce.

In the present invention, the DBP absorption amount means a value measured by the method specified in JIS K6217-4 "Carbon black for rubber - Basic properties - Part 4, How to determine DBP absorption amount."

Since the modified recycled carbon black is obtained by modifying recycled carbon black obtained by pyrolyzing rubber products such as waste tires, the ash content of the modified recycled carbon black is 3.0% or more and 50.0% or less and more preferably 5.0% or more and 35.0% or less.

In the present invention, the ash content means a value measured by the method specified in JIS K 6218-2.

[Examples]

The following describes the present invention using the following examples.

(Example 1)

The production apparatus 1 for modified recycled carbon black illustrated in FIG. 1 was used. First, to the main burner, city gas (composition: 88% of methane, 6% of ethane, 5% of propane, and 1% of butane) was supplied as the main burner fuel at 16.0 Nm$^3$/hour and air was supplied as the oxygen-containing gas at 215.0 Nm$^3$/hour to generate a flame. Subsequently, with the supply of city gas and air continued and with the generation of the flame continued, using carrier air at 10.0 Nm$^3$/hour, the raw material recycled carbon black was supplied to the main burner at 15 kg/hour and passed through the flame to perform the main burner modification step. The raw material recycled carbon was subjected to pulverization processing with a cutter mixer in advance. The modified recycled carbon black having passed through the flame was cooled with cooling water, and the gases were separated by a bag filter to obtain the modified recycled carbon black. At this time, the main burner total carbon combustion rate was 79.0%. The main burner flame combustion rate was 128.0%.

Next, the nitrogen adsorption specific surface area $N_2SA$ and the G band intensity with the D band intensity being 100 of the obtained modified recycled carbon black were measured. Consequently, the nitrogen adsorption specific surface area $N_2SA$ was 202 m$^2$/g, and the G band intensity with the D band intensity being 100 was 93.

Note that in Example 1, the auxiliary burner modification step was not performed.

Raw Material Recycled Carbon Black

Recycled carbon black obtained by pyrolysis of waste tires
PB365 manufactured by Enrestec, Inc.
Ash content: 18.6%,
G band intensity with D band intensity being 100: 113
$N_2SA$: 76 $m^2/g$

(Example 2)

Modification processing was performed on the same conditions as in Example 1 except that city gas was changed to 26.0 $Nm^3/hour$, air as the oxygen-containing gas was changed to 205.0 $Nm^3/hour$, and the raw material recycled carbon black was changed to 33 kg/hour. At this time, the main burner total carbon combustion rate was 39.0%. The main burner flame combustion rate was 72.0%. Consequently, the nitrogen adsorption specific surface area $N_2SA$ was 62 $m^2/g$, and the G band intensity with the D band intensity being 100 was 99.

(Example 3)

In addition to the conditions of Example 2, city gas as the auxiliary fuel at 3.0 $Nm^3/hour$ and air as the auxiliary burner oxygen-containing gas at 85.0 $Nm^3/hour$ were supplied from the auxiliary burner to generate a flame, and additional processing by the flame of the auxiliary burner was performed. At this time, the main burner total carbon combustion rate was 39.0%. The main burner flame combustion rate was 72.0%. In addition, the auxiliary burner flame combustion rate was 258.0%, and all-burner total carbon combustion rate was 52.0%. Consequently, the nitrogen adsorption specific surface area $N_2SA$ was 162 $m^2/g$, and the G band intensity with the D band intensity being 100 was 94.
In other words, in Example 3, the main burner modification step and the auxiliary burner modification step were performed.

(Example 4)

In addition to the conditions of Example 1, city gas as the auxiliary fuel at 12.0 $Nm^3/hour$ and air as the auxiliary burner oxygen-containing gas at 30.0 $Nm^3/hour$ were supplied from the auxiliary burner to generate a flame, and additional processing by the flame of the auxiliary burner was performed. At this time, the main burner total carbon combustion rate was 79.0%. The main burner flame combustion rate was 128.0%. In addition, the auxiliary burner flame combustion rate was 23.0%, and the all-burner total carbon combustion rate was 61.0%. Consequently, the nitrogen adsorption specific surface area $N_2SA$ was 113 $m^2/g$, and the G band intensity with the D band intensity being 100 was 97.
In other words, in Example 4, the main burner modification step and the auxiliary burner modification step were performed.

(Example 5)

An apparatus was used in which the auxiliary burner 4 of the production apparatus 1 for modified recycled carbon black illustrated in FIG. 1 was replaced by the fuel nozzle. First, to the main burner, city gas (composition: 88% of methane, 6% of ethane, 5% of propane, and 1% of butane) was supplied as the main burner fuel at 16.0 $Nm^3/hour$ and air was supplied as the oxygen-containing gas at 215.0 $Nm^3/hour$ to generate a flame. Subsequently, with the supply of city gas and air continued and with the generation of the flame continued, using carrier air at 10.0 $Nm^3/hour$, the raw material recycled carbon black was supplied to the main burner at 15 kg/hour and passed through the flame to perform the main burner modification step, and then city gas as the fuel at 12.0 $Nm^3/hour$ was supplied from the fuel nozzle to perform the auxiliary fuel pyrolysis step. At this time, the main burner total carbon combustion rate was 79.0%. The main burner flame combustion rate was 128.0%. In addition, the overall reaction total carbon combustion rate was 54.0%. Consequently, the nitrogen adsorption specific surface area $N_2SA$ was 90 $m^2/g$, and the G band intensity with the D band intensity being 100 was 96.
In other words, in Example 5, the main burner modification step and the auxiliary fuel pyrolysis step were performed.

INDUSTRIAL APPLICABILITY

According to the present invention, recycled carbon black having strong bonding with rubber components and high reinforcing properties for rubber products can be continuously produced, and thus rubber products having performance equivalent to that of virgin carbon black can be produced industrially advantageously using recycled carbon black obtained by pyrolyzing rubber products such as waste tires.

REFERENCE SIGNS LIST

| | |
|---|---|
| 1 | production apparatus for modified recycled carbon black |
| 2 | burner modification part |
| 3 | main burner |
| 4 | auxiliary burner |
| 5 | cooling water supply pipe |
| 6 | coupling pipe |
| 7 | collection part |
| 11 | main burner fuel |
| 12, 15 | oxygen-containing gas |
| 13 | raw material recycled carbon black and carrier gas |
| 14 | auxiliary burner fuel |
| 16 | cooling water |
| 17 | gas |
| 18 | modified recycled carbon black |
| 21 | flame being generated by main burner |
| 22 | moving direction of raw material recycled carbon black |
| 23 | flame being generated by auxiliary burner |
| 30a, 30b | main burner |
| 31 | supply path for main burner fuel |
| 32 | supply path for oxygen-containing gas |
| 33 | supply path for raw material recycled carbon black and carrier gas |
| 35 | ejection port for main burner fuel |
| 36 | ejection port for oxygen-containing gas |
| 37 | ejection port for raw material recycled carbon black and carrier gas |
| 38 | mixing chamber |

**Claims**

1. A method for producing modified recycled carbon black, the method comprising a main burner modification step of continuously supplying a main burner fuel, an oxygen-containing gas, and rubber carbide-adhering recycled carbon black to a main burner combusting a fuel and generating a flame to perform combustion of the main burner fuel and while continuously generating a flame by the main burner, introducing the rubber carbide-adhering recycled carbon black to the flame and passing the rubber carbide-adhering recycled carbon black through the flame, and making a main burner total carbon combustion rate represented by Expression (1) below:

$$\text{Main burner total carbon combustion rate } (\%) = (A/(B + C)) \times 100 \quad (1)$$

(in the expression, A indicates an oxygen amount being supplied to the main burner; B indicates a theoretical oxygen amount required for completely combusting the rubber carbide-adhering recycled carbon black being supplied to the main burner; and C indicates a theoretical oxygen amount required for completely combusting the main burner fuel being supplied to the main burner) less than 100.0%.

2. The method for producing modified recycled carbon black according to claim 1, wherein the main burner modification step is a main burner modification step (1) making a main burner flame combustion rate represented by Expression (2) below:

$$\text{Main burner flame combustion rate } (\%) = (A/C) \times 100 \quad (2)$$

(in the expression, A indicates an oxygen amount being supplied to the main burner; and C indicates a theoretical oxygen amount required for completely combusting the main burner fuel being supplied to the main burner) 100.0% or more.

3. The method for producing modified recycled carbon black according to claim 1, wherein the main burner modification step is a main burner modification step (2) making a main burner flame combustion rate represented by Expression (2) below:

$$\text{Main burner flame combustion rate } (\%) = (A/C) \times 100 \quad (2)$$

(in the expression, A indicates an oxygen amount being supplied to the main burner; and C indicates a theoretical oxygen amount required for completely combusting the main burner fuel being supplied to the main burner) less than 100.0%.

4. The method for producing modified recycled carbon black according to claim 2, further comprising an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (1) to the flame being generated by the auxiliary burner and passing the recycled carbon black after being subjected to the main burner modification step (1) through the flame, wherein the auxiliary burner modification step is an auxiliary burner modification step (1) making an auxiliary burner flame combustion rate represented by Expression (3) below:

$$\text{Auxiliary burner flame combustion rate } (\%) = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) 100.0% or more and making an all-burner total carbon combustion rate represented by Expression (4) below:

$$\text{All-burner total carbon combustion rate } (\%) = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

5. The method for producing modified recycled carbon black according to claim 2, further comprising an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (1) to the flame being generated by the auxiliary burner and passing the recycled carbon black after being subjected to the main burner modification step (1) through the flame, wherein the auxiliary burner modification step is an auxiliary burner modification step (2) making an auxiliary burner flame combustion rate represented by Expression (3) below:

$$\text{Auxiliary burner flame combustion rate } (\%) = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) less than 100.0% and making an all-burner total carbon combustion rate represented by Expression (4) below:

$$\text{All-burner total carbon combustion rate } (\%) = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

6. The method for producing modified recycled carbon black according to claim 3, further comprising an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (2) to the flame being generated by the auxiliary burner and passing the recycled carbon black after being subjected to the main burner modification step (2) through the flame, wherein the auxiliary burner modification step is an auxiliary burner modification step (1) making an auxiliary burner flame combustion rate represented by Expression (3) below:

$$\text{Auxiliary burner flame combustion rate } (\%) = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) 100.0% or more and making an all-burner total carbon combustion rate represented by Expression (4) below:

$$\text{All-burner total carbon combustion rate } (\%) = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

7. The method for producing modified recycled carbon black according to claim 3, further comprising an auxiliary burner modification step of providing an auxiliary burner combusting an auxiliary burner fuel to generate a flame after the main burner and while continuously generating a flame by the auxiliary burner, introducing the recycled carbon black after being subjected to the main burner modification step (2) to the flame being generated by the auxiliary burner and passing the recycled carbon black after being subjected to the main burner modification step (2) through the flame, wherein the auxiliary burner modification step is an auxiliary burner modification step (2) making an auxiliary burner flame combustion rate represented by Expression (3) below:

$$\text{Auxiliary burner flame combustion rate } (\%) = (D/E) \times 100 \quad (3)$$

(in the expression, D indicates an oxygen amount being supplied to the auxiliary burner; and E indicates a theoretical oxygen amount required for completely combusting the auxiliary burner fuel being supplied to the auxiliary burner) less than 100.0% and making an all-burner total carbon combustion rate represented by Expression (4) below:

$$\text{All-burner total carbon combustion rate } (\%) = ((A + D)/(B + C + E)) \times 100 \quad (4)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; D indicates an oxygen amount being supplied to the auxiliary burner; and E indicates a theoretical oxygen amount required for completely combusting the auxiliary burner fuel being supplied to the auxiliary burner) less than 100.0%.

8. The method for producing modified recycled carbon black according to claim 2 or 3, further comprising an auxiliary fuel pyrolysis step of providing a fuel nozzle after the main burner and introducing an auxiliary fuel from the fuel nozzle to or near the flame being generated by the main burner to pyrolyze the auxiliary fuel, wherein the auxiliary fuel pyrolysis step is an auxiliary fuel pyrolysis step making an overall reaction total carbon combustion rate represented by Expression (5) below:

$$\text{Overall reaction total carbon combustion rate (\%)} = (A/(B + C + F)) \times 100 \quad (5)$$

(in the expression, A indicates an oxygen amount being supplied to the main burner; B indicates a theoretical oxygen amount required for completely combusting the rubber carbide-adhering recycled carbon black being supplied to the main burner; C indicates a theoretical oxygen amount required for completely combusting the main burner fuel being supplied to the main burner; and F indicates a theoretical oxygen amount required for completely combusting the auxiliary fuel being supplied from the fuel nozzle) less than 100.0%.

9. The method for producing modified recycled carbon black according to claim 1, further comprising a particle size adjustment step of pulverizing and/or classifying the rubber carbide-adhering recycled carbon black before performing the main burner modification step.

**Patentansprüche**

1. Verfahren zur Herstellung von modifiziertem Recycling-Ruß, wobei das Verfahren einen Hauptbrenner-Modifizierungsschritt umfasst, bei dem einem Hauptbrenner kontinuierlich ein Hauptbrenner-Brennstoff, ein sauerstoffhaltiges Gas und an Gummicarbid haftender Recycling-Ruß zugeführt werden, der einen Brennstoff verbrennt und eine Flamme erzeugt, um die Verbrennung des Hauptbrenner-Brennstoffs durchzuführen, und währenddessen kontinuierlich eine Flamme durch den Hauptbrenner erzeugt wird, der an Gummicarbid haftenden Recycling-Ruß in die Flamme eingeführt und durch die Flamme geleitet wird.
Die Gesamtkohlenstoffverbrennungsrate des Hauptbrenners wird durch den folgenden Ausdruck (1) dargestellt:

$$\text{Gesamtkohlenstoffverbrennungsrate des Hauptbrenners (\%)} = (A/(B + C)) \times 100 \quad (1)$$

(In diesem Ausdruck bezeichnet A die Sauerstoffmenge, die dem Hauptbrenner zugeführt wird, B bezeichnet die theoretische Sauerstoffmenge, die für die vollständige Verbrennung des dem Hauptbrenner zugeführten, an Gummicarbid haftenden recycelten Rußes erforderlich ist; und C bezeichnet die theoretische Sauerstoffmenge, die für die vollständige Verbrennung des dem Hauptbrenner zugeführten Brennstoffs erforderlich ist) weniger als 100,0 %.

2. Verfahren zur Herstellung von modifiziertem recyceltem Ruß nach Anspruch 1, wobei der Hauptbrenner-Modifizierungsschritt ein Hauptbrenner-Modifizierungsschritt (1) ist, der eine Hauptbrennerflammen-Verbrennungsrate gemäß dem nachstehenden Ausdruck (2) erzeugt:

$$\text{Verbrennungsgrad der Hauptbrennerflamme (\%)} = (A/C) \times 100 \quad (2)$$

(In diesem Ausdruck bezeichnet A die dem Hauptbrenner zugeführte Sauerstoffmenge und C die theoretische Sauerstoffmenge, die für die vollständige Verbrennung des dem Hauptbrenner zugeführten Brennstoffs erforderlich ist) 100,0 % oder mehr.

3. Verfahren zur Herstellung von modifiziertem recyceltem Ruß nach Anspruch 1, wobei der Hauptbrenner-Modifizierungsschritt (2) ein Hauptbrenner-Modifizierungsschritt ist, der eine Hauptbrennerflammen-Verbrennungsrate gemäß dem nachstehenden Ausdruck (2) erzeugt:

$$\text{Verbrennungsgrad der Hauptbrennerflamme (\%)} = (A/C) \times 100 \quad (2)$$

(In diesem Ausdruck bezeichnet A die dem Hauptbrenner zugeführte Sauerstoffmenge und C die theoretische Sauerstoffmenge, die für die vollständige Verbrennung des dem Hauptbrenner zugeführten Brennstoffs erforderlich ist) weniger als 100,0 %.

4. Verfahren zur Herstellung von modifiziertem Recycling-Ruß nach Anspruch 2, weiter umfassend einen Hilfsbrenner-Modifizierungsschritt, bei dem ein Hilfsbrenner bereitgestellt wird, der einen Hilfsbrenner-Brennstoff verbrennt, um nach dem Hauptbrenner eine Flamme zu erzeugen, und während der Hilfsbrenner kontinuierlich eine Flamme erzeugt, der Recycling-Ruß, nachdem er dem Hauptbrenner-Modifizierungsschritt (1) unterzogen wurde, der vom Hilfsbrenner erzeugten Flamme zugeführt und durch die Flamme geleitet wird, wobei der Hilfsbrenner-Modifizierungsschritt ein Hilfsbrenner-Modifizierungsschritt (1) ist, der eine Hilfsbrenner-Flammenverbrennungsrate macht, die durch den nachstehenden Ausdruck (3) dargestellt wird:

$$\text{Verbrennungsgrad der Hilfsbrennerflamme (\%)} = (D/E) \times 100 \qquad (3)$$

(In der Gleichung bezeichnet D die dem Hilfsbrenner zugeführte Sauerstoffmenge und E die theoretische Sauerstoffmenge, die für die vollständige Verbrennung des dem Hilfsbrenner zugeführten Brennstoffs erforderlich ist) 100,0 % oder mehr und eine Gesamtkohlenstoffverbrennungsrate aller Brenner gemäß der nachstehenden Gleichung (4) macht:

$$\text{Gesamtkohlenstoffverbrennungsrate aller Brenner (\%)} = ((A + D) /(B + C + E)) \times 100 \qquad (4)$$

(In diesem Ausdruck bezeichnet A die dem Hauptbrenner zugeführte Sauerstoffmenge; B die theoretische Sauerstoffmenge, die für die vollständige Verbrennung des dem Hauptbrenner zugeführten, an Gummicarbid haftenden recycelten Rußes erforderlich ist; C die theoretische Sauerstoffmenge, die für die vollständige Verbrennung des dem Hauptbrenner zugeführten Brennstoffs erforderlich ist; D die dem Hilfsbrenner zugeführte Sauerstoffmenge; und E die theoretische Sauerstoffmenge, die für die vollständige Verbrennung des dem Hilfsbrenner zugeführten Brennstoffs erforderlich ist) weniger als 100,0 %.

5. Verfahren zur Herstellung von modifiziertem Recycling-Ruß nach Anspruch 2, weiter umfassend einen Hilfsbrenner-Modifizierungsschritt, bei dem ein Hilfsbrenner bereitgestellt wird, der einen Hilfsbrennerbrennstoff verbrennt, um nach dem Hauptbrenner eine Flamme zu erzeugen, und während der Hilfsbrenner kontinuierlich eine Flamme erzeugt, der Recycling-Ruß, nachdem er dem Hauptbrenner-Modifizierungsschritt (1) unterzogen wurde, der vom Hilfsbrenner erzeugten Flamme zugeführt und durch die Flamme geleitet wird, wobei der Hilfsbrenner-Modifizierungsschritt ein Hilfsbrenner-Modifizierungsschritt (2) ist, der eine durch den folgenden Ausdruck (3) dargestellte Verbrennungsrate der Hilfsbrennerflamme erzeugt:

$$\text{Verbrennungsgrad der Hilfsbrennerflamme (\%)} = (D/E) \times 100 \qquad (3)$$

(In diesem Ausdruck bezeichnet D die dem Hilfsbrenner zugeführte Sauerstoffmenge und E die theoretische Sauerstoffmenge, die für die vollständige Verbrennung des dem Hilfsbrenner zugeführten Brennstoffs erforderlich ist) weniger als 100,0 % und macht eine Gesamtkohlenstoffverbrennungsrate aller Brenner, die durch die nachstehende Gleichung (4) dargestellt wird:

$$\text{Gesamtkohlenstoffverbrennungsrate aller Brenner (\%)} = ((A + D) /(B + C + E)) \times 100 \qquad (4)$$

(In diesem Ausdruck bezeichnet A die dem Hauptbrenner zugeführte Sauerstoffmenge; B die theoretische Sauerstoffmenge, die für die vollständige Verbrennung des dem Hauptbrenner zugeführten, an Gummicarbid haftenden recycelten Rußes erforderlich ist; C die theoretische Sauerstoffmenge, die für die vollständige Verbrennung des dem Hauptbrenner zugeführten Brennstoffs erforderlich ist; D die dem Hilfsbrenner zugeführte Sauerstoffmenge, und E die theoretische Sauerstoffmenge, die für die vollständige Verbrennung des dem Hilfsbrenner zugeführten Brennstoffs erforderlich ist) weniger als 100,0 %.

6. Verfahren zur Herstellung von modifiziertem Recycling-Ruß nach Anspruch 3, weiter umfassend einen Hilfsbrenner-Modifizierungsschritt, bei dem ein Hilfsbrenner bereitgestellt wird, der einen Hilfsbrenner-Brennstoff verbrennt, um nach dem Hauptbrenner eine Flamme zu erzeugen, und während der Hilfsbrenner kontinuierlich eine Flamme erzeugt, der Recycling-Ruß, nachdem er dem Hauptbrenner-Modifizierungsschritt (2) unterzogen wurde, der vom Hilfsbrenner erzeugten Flamme zugeführt und durch die Flamme geleitet wird, wobei der Hilfsbrenner-Modifizierungsschritt ein Hilfsbrenner-Modifizierungsschritt (1) ist, der eine durch den folgenden Ausdruck (3) dargestellte Verbrennungsrate der Hilfsbrennerflamme erzeugt:

$$\text{Verbrennungsgrad der Hilfsbrennerflamme (\%)} = (D/E) \times 100 \qquad (3)$$

(In diesem Ausdruck bezeichnet D die dem Hilfsbrenner zugeführte Sauerstoffmenge und E die theoretische Sauerstoffmenge, die für die vollständige Verbrennung des dem Hilfsbrenner zugeführten Brennstoffs erforderlich ist.) 100,0 % oder mehr und eine Gesamtkohlenstoffverbrennungsrate aller Brenner gemäß der nachstehenden Gleichung (4):

$$\text{Gesamtkohlenstoffverbrennungsrate aller Brenner (\%)} = ((A + D)/(B + C + E)) \times 100 \qquad (4)$$

(In diesem Ausdruck bezeichnet A die dem Hauptbrenner zugeführte Sauerstoffmenge; B die theoretische Sauerstoffmenge, die für die vollständige Verbrennung des dem Hauptbrenner zugeführten, an Gummicarbid haftenden recycelten Rußes erforderlich ist; C die theoretische Sauerstoffmenge, die für die vollständige Verbrennung des dem Hauptbrenner zugeführten Brennstoffs erforderlich ist; D die dem Hilfsbrenner zugeführte Sauerstoffmenge; und E die theoretische Sauerstoffmenge, die für die vollständige Verbrennung des dem Hilfsbrenner zugeführten Brennstoffs erforderlich ist) weniger als 100,0 %.

7. Verfahren zur Herstellung von modifiziertem Recycling-Ruß nach Anspruch 3, weiter umfassend einen Hilfsbrenner-Modifizierungsschritt, bei dem ein Hilfsbrenner bereitgestellt wird, der einen Hilfsbrennerbrennstoff verbrennt, um nach dem Hauptbrenner eine Flamme zu erzeugen, und während der Hilfsbrenner kontinuierlich eine Flamme erzeugt, der Recycling-Ruß, nachdem er dem Hauptbrenner-Modifizierungsschritt (2) unterzogen wurde, der vom Hilfsbrenner erzeugten Flamme zugeführt und durch die Flamme geleitet wird, wobei der Hilfsbrenner-Modifizierungsschritt ein Hilfsbrenner-Modifizierungsschritt (2) ist, der eine Hilfsbrenner-Flammenverbrennungsrate macht, die durch den nachstehenden Ausdruck (3) dargestellt wird:

$$\text{Verbrennungsgrad der Hilfsbrennerflamme (\%)} = (D/E) \times 100 \qquad (3)$$

(In diesem Ausdruck bezeichnet D die dem Hilfsbrenner zugeführte Sauerstoffmenge und E die theoretische Sauerstoffmenge, die für die vollständige Verbrennung des dem Hilfsbrenner zugeführten Brennstoffs erforderlich ist) weniger als 100,0 % und macht eine Gesamtkohlenstoffverbrennungsrate aller Brenner, die durch die nachstehende Gleichung (4) dargestellt wird:

$$\text{Gesamtkohlenstoffverbrennungsrate aller Brenner (\%)} = ((A + D)/(B + C + E)) \times 100 \qquad (4)$$

(In diesem Ausdruck bezeichnet A die dem Hauptbrenner zugeführte Sauerstoffmenge; B die theoretische Sauerstoffmenge, die für die vollständige Verbrennung des dem Hauptbrenner zugeführten, an Gummicarbid haftenden recycelten Rußes erforderlich ist; C die theoretische Sauerstoffmenge, die für die vollständige Verbrennung des dem Hauptbrenner zugeführten Brennstoffs erforderlich ist; D die dem Hilfsbrenner zugeführte Sauerstoffmenge; und E die theoretische Sauerstoffmenge, die für die vollständige Verbrennung des dem Hilfsbrenner zugeführten Brennstoffs erforderlich ist) weniger als 100,0 %.

8. Verfahren zur Herstellung von modifiziertem recyceltem Ruß nach Anspruch 2 oder 3, weiter umfassend einen Hilfsbrennstoffpyrolyseschritt, bei dem nach dem Hauptbrenner eine Brennstoffdüse bereitgestellt und ein Hilfsbrennstoff aus der Brennstoffdüse in die Nähe der vom Hauptbrenner erzeugten Flamme eingeführt wird, um den Hilfsbrennstoff zu pyrolysieren, wobei der Hilfsbrennstoffpyrolyseschritt ein Hilfsbrennstoffpyrolyseschritt ist, der eine Gesamtverbrennungsrate des Kohlenstoffs gemäß dem nachstehenden Ausdruck (5) bewirkt:

$$\text{Gesamtreaktion-Gesamtkohlenstoffverbrennungsrate (\%)} = (A/(B + C + F)) \times 100 \qquad (5)$$

(In diesem Ausdruck bezeichnet A die Sauerstoffmenge, die dem Hauptbrenner zugeführt wird; B bezeichnet die theoretische Sauerstoffmenge, die für die vollständige Verbrennung des an Gummicarbid haftenden recycelten Rußes erforderlich ist, der dem Hauptbrenner zugeführt wird; C bezeichnet die theoretische Sauerstoffmenge, die für die vollständige Verbrennung des dem Hauptbrenner zugeführten Brennstoffs erforderlich ist; und F bezeichnet die theoretische Sauerstoffmenge, die für die vollständige Verbrennung des aus der Brennstoffdüse zugeführten Hilfsbrennstoffs erforderlich ist) weniger als 100,0 %.

9. Verfahren zur Herstellung von modifiziertem Recycling-Ruß nach Anspruch 1, weiter umfassend einen Teilchengrößenanpassungsschritt durch Pulverisieren und/oder Klassieren des an Gummicarbid haftenden Recycling-Rußes vor Durchführung des Hauptbrenner-Modifizierungsschritts.

## Revendications

1. Procédé de production de noir de carbone recyclé modifié, le procédé comprenant une étape de modification de brûleur principal consistant à alimenter en continu en un combustible de brûleur principal, un gaz contenant de l'oxygène et du noir de carbone recyclé adhérant au carbure de caoutchouc un brûleur principal brûlant un combustible et générer une flamme pour réaliser la combustion du combustible de brûleur principal et tout en générant en continu une flamme par le brûleur principal, introduire le noir de carbone recyclé adhérant au carbure de caoutchouc vers la flamme et passer le noir de carbone recyclé adhérant au carbure de caoutchouc à travers la flamme, et rendre un taux de combustion de carbone total de brûleur principal représenté par l'Expression (1) ci-dessous :

taux de combustion de carbone total de brûleur principal (%) = (A/(B + C)) x 100 (1)

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; et C indique une quantité d'oxygène théorique requise pour la combustion complète du combustible de brûleur principal qui est alimenté vers le brûleur principal) inférieur à 100,0 %.

2. Procédé de production de noir de carbone recyclé modifié selon la revendication 1, dans lequel l'étape de modification de brûleur principal est une étape de modification de brûleur principal (1) rendant un taux de combustion de flamme de brûleur principal représenté par l'Expression (2) ci-dessous :

$$\text{taux de combustion de flamme de brûleur principal (\%)} = (A/C) \times 100 \quad (2)$$

(dans l'expression, A indique une quantité d'oxygène qui est alimentée vers le brûleur principal ; et C indique une quantité d'oxygène théorique requise pour la combustion complète du combustible de brûleur principal qui est alimenté vers le brûleur principal) de 100,0 % ou plus.

3. Procédé de production de noir de carbone recyclé modifié selon la revendication 1, dans lequel l'étape de modification de brûleur principal est une étape de modification de brûleur principal (2) rendant un taux de combustion de flamme de brûleur principal représenté par l'Expression (2) ci-dessous :

$$\text{taux de combustion de flamme de brûleur principal (\%)} = (A/C) \times 100 \quad (2)$$

(dans l'expression, A indique une quantité d'oxygène qui est alimentée vers le brûleur principal ; et C indique une quantité d'oxygène théorique requise pour la combustion complète du combustible de brûleur principal qui est alimenté vers le brûleur principal) inférieur à 100,0 %.

4. Procédé de production de noir de carbone recyclé modifié selon la revendication 2, comprenant en outre une étape de modification de brûleur auxiliaire consistant à fournir un brûleur auxiliaire brûlant un combustible de brûleur auxiliaire pour générer une flamme après le brûleur principal et tout en générant en continu une flamme par le brûleur auxiliaire, introduire le noir de carbone recyclé après avoir été soumis à l'étape de modification de brûleur principal (1) vers la flamme qui est générée par le brûleur auxiliaire et passer le noir de carbone recyclé après avoir été soumis à l'étape de modification de brûleur principal (1) à travers la flamme, dans lequel l'étape de modification de brûleur auxiliaire est une étape de modification de brûleur auxiliaire (1) rendant un taux de combustion de flamme de brûleur auxiliaire représenté par l'Expression (3) ci-dessous :

$$\text{taux de combustion de flamme de brûleur auxiliaire (\%)} = (D/E) \times 100 \quad (3)$$

(dans l'expression, D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) de 100,0 % ou plus et rendant un taux de combustion de carbone total de tous les brûleurs représenté par l'Expression (4) ci-dessous :

taux de combustion de carbone total de tous les brûleurs (%) = ((A + D)/(B + C + E)) x 100     (4)

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; C indique une quantité d'oxygène théorique requise pour la combustion complète du combustible de brûleur principal qui est alimenté vers le brûleur principal ; D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 %.

5. Procédé de production de noir de carbone recyclé modifié selon la revendication 2, comprenant en outre une étape de modification de brûleur auxiliaire consistant à fournir un brûleur auxiliaire brûlant un combustible de brûleur auxiliaire pour générer une flamme après le brûleur principal et tout en générant en continu une flamme par le brûleur auxiliaire, introduire le noir de carbone recyclé après avoir été soumis à l'étape de modification de brûleur principal (1) vers la flamme qui est générée par le brûleur auxiliaire et passer le noir de carbone recyclé après avoir été soumis à l'étape de modification de brûleur principal (1) à travers la flamme, dans lequel l'étape de modification de brûleur auxiliaire est une étape de modification de brûleur auxiliaire (2) rendant un taux de combustion de flamme de brûleur auxiliaire représenté par l'Expression (3) ci-dessous :

$$\text{taux de combustion de flamme de brûleur auxiliaire (\%)} = (D/E) \times 100 \qquad (3)$$

(dans l'expression, D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 % et rendant un taux de combustion de carbone total de tous les brûleurs représenté par l'Expression (4) ci-dessous :

taux de combustion de carbone total de tous les brûleurs (%) = ((A + D)/(B + C + E)) x 100     (4)

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; C indique une quantité d'oxygène théorique requise pour la combustion complète du combustible de brûleur principal qui est alimenté vers le brûleur principal ; D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 %.

6. Procédé de production de noir de carbone recyclé modifié selon la revendication 3, comprenant en outre une étape de modification de brûleur auxiliaire consistant à fournir un brûleur auxiliaire brûlant un combustible de brûleur auxiliaire pour générer une flamme après le brûleur principal et tout en générant en continu une flamme par le brûleur auxiliaire, introduire le noir de carbone recyclé après avoir été soumis à l'étape de modification de brûleur principal (2) vers la flamme qui est générée par le brûleur auxiliaire et passer le noir de carbone recyclé après avoir été soumis à l'étape de modification de brûleur principal (2) à travers la flamme, dans lequel l'étape de modification de brûleur auxiliaire est une étape de modification de brûleur auxiliaire (1) rendant un taux de combustion de flamme de brûleur auxiliaire représenté par l'Expression (3) ci-dessous :

$$\text{taux de combustion de flamme de brûleur auxiliaire (\%)} = (D/E) \times 100 \qquad (3)$$

(dans l'expression, D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) de 100,0 % ou plus et rendant un taux de combustion de carbone total de tous les brûleurs représenté par l'Expression (4) ci-dessous :

taux de combustion de carbone total de tous les brûleurs (%) = ((A + D)/(B + C + E)) x 100     (4)

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; C indique une quantité d'oxygène théorique requise pour la combustion complète du combustible de brûleur principal qui est alimenté vers le brûleur principal ; D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 %.

7. Procédé de production de noir de carbone recyclé modifié selon la revendication 3, comprenant en outre une étape de modification de brûleur auxiliaire consistant à fournir un brûleur auxiliaire brûlant un combustible de brûleur auxiliaire pour générer une flamme après le brûleur principal et tout en générant en continu une flamme par le brûleur auxiliaire, introduire le noir de carbone recyclé après avoir été soumis à l'étape de modification de brûleur principal (2) vers la flamme qui est générée par le brûleur auxiliaire et passer le noir de carbone recyclé après avoir été soumis à l'étape de modification de brûleur principal (2) à travers la flamme, dans lequel l'étape de modification de brûleur auxiliaire est une étape de modification de brûleur auxiliaire (2) rendant un taux de combustion de flamme de brûleur auxiliaire représenté par l'Expression (3) ci-dessous :

$$\text{taux de combustion de flamme de brûleur auxiliaire (\%)} = (D/E) \times 100 \qquad (3)$$

(dans l'expression, D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 % et rendant un taux de combustion de carbone total de tous les brûleurs représenté par l'Expression (4) ci-dessous :

$$\text{taux de combustion de carbone total de tous les brûleurs (\%)} = ((A + D)/(B + C + E)) \times 100 \qquad (4)$$

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; C indique une quantité d'oxygène théorique requise pour la combustion complète du combustible de brûleur principal qui est alimenté vers le brûleur principal ; D indique une quantité d'oxygène qui est alimentée vers le brûleur auxiliaire ; et E indique une quantité d'oxygène théorique requise pour la combustion complète du combustible de brûleur auxiliaire qui est alimenté vers le brûleur auxiliaire) inférieur à 100,0 %.

8. Procédé de production de noir de carbone recyclé modifié selon la revendication 2 ou 3, comprenant en outre une étape de pyrolyse de combustible auxiliaire consistant à fournir une buse de combustible après le brûleur principal et introduire un combustible auxiliaire de la buse de combustible vers ou près de la flamme qui est générée par le brûleur principal pour pyrolyser le combustible auxiliaire, dans lequel l'étape de pyrolyse de combustible auxiliaire est une étape de pyrolyse de combustible auxiliaire rendant un taux de combustion de carbone total de réaction globale représenté par l'Expression (5) ci-dessous :

$$\text{taux de combustion de carbone total de réaction globale (\%)} = (A/(B + C + F)) \times 100 \qquad (5)$$

(dans l'expression, A indique une quantité d'oxygène qui est alimentée vers le brûleur principal ; B indique une quantité d'oxygène théorique requise pour la combustion complète du noir de carbone recyclé adhérant au carbure de caoutchouc qui est alimenté vers le brûleur principal ; C indique une quantité d'oxygène théorique requise pour la combustion complète du combustible de brûleur principal qui est alimenté vers le brûleur principal ; et F indique une quantité d'oxygène théorique requise pour la combustion complète du combustible auxiliaire qui est alimenté depuis la buse de combustible) inférieur à 100,0 %.

9. Procédé de production de noir de carbone recyclé modifié selon la revendication 1, comprenant en outre une étape d'ajustement de taille particulaire consistant à pulvériser et/ou classifier le noir de carbone recyclé adhérant au carbure de caoutchouc avant de réaliser l'étape de modification de brûleur principal.

FIG. 1

EP 4 474 433 B1

FIG. 2

27

FIG. 3

11  12  13

3

21

22

4

14

15

23

FIG. 4

FIG. 5

FIG. 6

FIG. 7

**EP 4 474 433 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5813985 B
- WO 2013095145 A1
- JP 3001561 B
- JP 5367471 B
- JP 3312228 B
- JP 4769276 B
- JP 2021050897 A
- JP 2010156025 A
- JP 6580710 B